# EUROPÄISCHE PATENTSCHRIFT

(11) **EP 3 049 701 B1**
(45) Veröffentlichungstag und Bekanntmachung des Hinweises auf die Patenterteilung: **14.11.2018**
(21) Anmeldenummer: 14759103.6
(22) Anmeldetag: 05.09.2014
(51) Int. Cl.: F16K 11/20, F16K 31/06

(54) **VENTILANORDNUNG**
VALVE ARRANGEMENT
SYSTÈME DE SOUPAPE

(30) Priorität: 25.09.2013 DE 102013016272
(43) Veröffentlichungstag der Anmeldung: 03.08.2016
(73) Patentinhaber: WABCO GmbH, 30453 Hannover (DE)
(72) Erfinder: GERLACH, Timo, 30163 Hannover (DE); KNOKE, Stefan, 30657 Hannover (DE); KRAFT, Hansjörg, 30453 Hannover (DE); SPREMBERG, Jan, 31157 Sarstedt (DE)
(74) Vertreter: Lauerwald, Jörg
(86) Internationale Anmeldenummer: PCT/EP2014/002418
(87) Internationale Veröffentlichungsnummer: WO 2015/043711

(56) Entgegenhaltungen:
- DE-A1- 2 315 325
- DE-A1-102005 024 376
- DE-A1-102006 031 380
- DE-B3-102008 019 453

## Beschreibung

Die Erfindung betrifft eine Getriebebremse für ein automatisiertes Schaltgetriebe mit einer Ventilanordnung gemäß dem Oberbegriff des Anspruchs 1.
Schaltgetriebe werden typischerweise manuell bedient. Aus verschiedenen Gründen (Komfort, geringerer Verschleiß, usw.) werden alternativ automatisierte Schaltgetriebe in Fahrzeuge eingebaut. Die Schaltbewegungen werden von Stellgliedern ausgeführt. Die Stellglieder können Bestandteile eines pneumatischen oder hydraulischen Systems sein. Nutzfahrzeuge und Busse sind typischerweise mit Druckluftbremsen ausgestattet. Entsprechend ist für die Betätigung des automatisierten Schaltgetriebes das ohnehin vorhandene pneumatische System nutzbar. Möglich ist aber auch eine hydraulische Betätigung, insbesondere in Fahrzeugen ohne pneumatische Systeme.
In automatisierten Schaltgetrieben kann auch eine Getriebebremse vorgesehen sein. Die Betätigung der Getriebebremse erfolgt durch einen Bremszylinder, welcher zum Bremsen pneumatisch oder hydraulisch "belüftet" wird und zum Lösen insbesondere durch Federdruck "entlüftet" wird.
Als Stellglied für den Bremszylinder des Getriebes ist eine Ventilanordnung vorgesehen, welche aus einem oder mehreren Ventilen bestehen kann. In der DE 10 2006 031 380 A1 ist eine Anordnung zur Ansteuerung eines Getriebebremszylinders offenbart, bei der zwei 2/2-NC-Ventile für die Ansteuerung mit Druckluft vorgesehen sind. Es handelt sich um Magnetventile, die im stromlosen Zustand unter Federdruck in ihrer Normalstellung geschlossen sind, also "normally closed". Daneben existieren NO-Ventile, welche in Normalstellung geöffnet sind, also "normally open", die aber in der DE 10 2006 031 380 A1 nicht gezeigt sind.
Die Verwendung von zwei Ventilen erfordert einen relativ großen Bauraum für die Ventilanordnung. Alternativ möglich ist die Verwendung eines 3/2-NC-Ventils. Dies ermöglicht aber keine abstufbare Ansteuerung des Bremszylinders.
Aufgabe der vorliegenden Erfindung ist die Schaffung einer Getriebebremse für ein automatisiertes Schaltgetriebe mit einer Ventilanordnung zur Belüftung und Entlüftung eines insbesondere federbelasteten Fluidzylinders, wobei die Ventilanordnung einen geringen Bauraum aufweisen und eine abstufbare Bremswirkung ermöglichen soll. Vorzugsweise soll die Bremswirkung schnell aufbaubar sein, mit der Möglichkeit zur Begrenzung der Bremskraft. Schließlich soll die Anordnung möglichst in Nutzfahrzeugen unterschiedlicher Bauart mit unterschiedlicher Leistungsklasse des Motors bzw. Getriebes verwendbar sein.

Gegenstand der Erfindung ist also eine Getriebebremse für ein automatisiertes Schaltgetriebe mit einer Ventilanordnung, welche eine oder mehrere der genannten Aufgaben durch die Merkmale des Anspruchs 1 löst. Vorgesehen ist ein Magnetventil mit mindestens drei Anschlüssen und drei Stellungen, mit Sperr-Mittelstellung und NC-Funktion. Das Magnetventil ist vorzugsweise monostabil und nimmt im stromlosen Zustand eine definierte Stellung ein. Dabei kann die Ventilanordnung aus genau einem Magnetventil bestehen oder aber weitere Ventile aufweisen. Die NC-Funktion ist gegeben, wenn im stromlosen Zustand ein Pfad zwischen einem Anschluss für ein unter Druck stehendes Fluid und einem Arbeitsanschluss versperrt ist. Weitere Anschlüsse können im stromlosen Zustand offen sein, weitere Pfade können durchgängig sein. Grundsätzlich sind Magnetventile mit den oben beschriebenen Eigenschaften aus der DE 10 2008 019 453 B3 bekannt. Eine Anregung, ein derartiges Ventil für eine Getriebebremse zu verwenden, ist dieser Schrift nicht zu entnehmen.

Vorteilhafterweise ist das Magnetventil ein 3/3-Wege-Ventil. Damit ist ein kompakter, einfacher Aufbau möglich.

Bevorzugt ist eine Ausführung des Magnetventils mit mindestens oder genau drei verschiedenen Stellungen, nämlich der genannten Sperr-Mittelstellung und zwei Endstellungen. Je nach Stellung sind Anschlüsse des Magnetventils gesperrt oder offen. Bei drei Anschlüssen sind typischerweise ein Arbeitsanschluss, ein Entlüftungsanschluss und ein Druckluftanschluss vorgesehen.

Erfindungsgemäß kann das Magnetventil eine Federrückstellung in die Sperr-Mittelstellung aufweisen. In der Sperr-Mittelstellung ist der Druckluftanschluss gesperrt, vorzugsweise auch der Entlüftungsanschluss.

Nach einem weiteren Gedanken der Erfindung kann das Magnetventil eine Federrückstellung in eine Endstellung aufweisen, insbesondere in eine Sperr-Endstellung mit offenem Entlüftungsanschluss. Dabei ist der Druckluftanschluss verschlossen, sobald das Magnetventil stromlos ist und nur die Federrückstellung wirkt. Vorzugsweise ist eine Entlüftung vom Arbeitsanschluss zum Entlüftungsanschluss möglich.

Der Begriff "Druckluftanschluss" wurde zur Vereinfachung gewählt. Sofern als Arbeitsmedium ein anderes Fluid als Druckluft verwendet wird, wäre der betreffende Anschluss umzubenennen. Wichtig ist nur, dass über diesen Anschluss das Fluid unter Druck zuführbar ist.

Nach einem weiteren Gedanken der Erfindung weist das Magnetventil einen Anker und zwei Spulen auf, wobei die Spulen axial zueinander versetzt angeordnet sind und der Anker in Sperr-Mittelstellung in beide Spulen teilweise eintaucht. Die Spulen sind vorzugsweise axial mit Abstand zueinander angeordnet. Durch Aktivierung einer der beiden Spulen wird der Anker in diese aktivierte Spule weiter hineingezogen.

Erfindungsgemäß kann der Anker an seinen beiden Enden insbesondere federbelastete Dichtelemente aufweisen, welche in Sperr-Mittelstellung Anschlüsse des Magnetventils abdichten. Dadurch ist eine wirksame Sperr-Mittelstellung gegeben. Jeder Anschluss weist ein in das Magnetventil gerichtetes Leitungsende oder eine Bohrung auf. Den abzudichtenden Anschlüssen ist jeweils ein Sitz zugeordnet, an dem das zugehörige Dichtelement zum Abdichten anliegen kann. Der Sitz bildet einen Abschluss für das Leitungsende oder die Bohrung im Inneren des Magnetventils.

Vorzugsweise sind die Dichtelemente und die Anschlüsse koaxial zueinander ausgerichtet. Dadurch treten keine Querkräfte auf.

Erfindungsgemäß können die Dichtelemente aus den Enden des Ankers herausragen. Vorteilhafterweise sind die Dichtelemente - bei Bewegung des Ankers - gegen den Druck einer im Anker liegenden Feder in die Enden des Ankers eindrückbar. Dies ermöglicht eine besonders einfache Funktionsweise in Verbindung mit einer einfachen Konstruktion. Die Feder kann auch mehrteilig ausgebildet sein. Alternativ liegen die Dichtelemente in den Enden des Ankers und die Sitze ragen in den Anker hinein.

Nach einem weiteren Gedanken der Erfindung liegt bei Bewegung des Ankers (in eine der Spulen) eines der Dichtelemente an seinem Anschluss bzw. einem zugehörigen Sitz an und taucht zugleich in den Anker ein, während das andere Dichtelement von seinem Anschluss bzw. einem zugehörigen Sitz abhebt und diesen Anschluss freigibt. Bei axialer Bewegung des Ankers aus der Mittelstellung heraus wird stets einer der Anschlüsse geöffnet, während der andere geschlossen bleibt. Dadurch kann ein angeschlossener Bremszylinder entweder belüftet oder entlüftet werden. In der stromlosen Sperr-Mittelstellung des Ankers sind beide Anschlüsse geschlossen. Dadurch sind eine Taktung und eine Druckbegrenzung möglich. In Sperr-Mittelstellung wird der Druck an den Anschlüssen durch das Magnetventil gehalten.

Erfindungsgemäß kann der Anker eine Röhre mit endseitigen Öffnungen aufweisen, wobei in der Röhre zwei Kappen auf einer gemeinsamen Druckfeder stecken und von dieser auseinander gedrückt werden, und wobei die Kappen endseitig mit den Dichtelementen versehen sind. Die Kappen nehmen den Druck der Feder auf, während die Dichtelemente zum Verschließen der Anschlüsse ausgebildet sind. Die verwendeten Werkstoffe sind entsprechend ausgewählt. Kappen und Dichtelemente sind beispielsweise durch Kleben, Anspritzen oder Aufvulkanisieren miteinander verbunden.

Die Dichtelemente weisen insbesondere einen geringeren Durchmesser auf als die Kappen, wobei vorzugsweise die Röhre endseitig jeweils einwärts gerichtete Ränder aufweist, zum Abstützen von Rändern an Stirnseiten der Kappen. Die Kappen werden durch die einwärts gerichteten Ränder der Röhre am Austreten aus der Röhre gehindert. Nur die Dichtelemente stehen aufgrund ihres geringeren Durchmessers aus den Enden der Röhre hervor.

Nach einem weiteren Gedanken der Erfindung sind außenseitige bzw. nach außen führende Anschlüsse am Magnetventil zum Belüften und Entlüften koaxial zum Anker angeordnet. Vorzugsweise ist mindestens ein Arbeitsanschluss am Magnetventil achsparallel zum Anker ausgerichtet, also nicht koaxial zum Anker, aber vorzugsweise noch innerhalb einer der Spulen. Alternativ kann der Arbeitsanschluss (oder ein anderer Anschluss) am Magnetventil auch radial oder mittig zwischen den Spulen vorgesehen sein.

Nach einem weiteren Gedanken der Erfindung ist vorgesehen, dass das Magnetventil eine Federrückstellung in eine Stellung aufweist, in der entweder nur ein Pfad zwischen einem Anschluss für ein unter Druck stehendes Fluid und einem Arbeitsanschluss versperrt ist, oder in der außerdem ein Pfad zwischen Arbeitsanschluss und einem Entlüftungsanschluss versperrt ist. In beiden Fällen ist die NC-Funktion gegeben.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: ein Ventilschaubild eines erfindungsgemäßen Magnetventils,
- Fig. 2: eine Prinzipskizze des Magnetventils in Sperr-Mittelstellung,
- Fig. 3: das Magnetventil gemäß Fig. 2, jedoch mit durchgängiger Verbindung Arbeitsanschluss-Entlüftungsanschluss,
- Fig. 4: das Ventil gemäß Fig. 2, jedoch mit durchgängiger Verbindung Druckluftanschluss-Arbeitsanschluss.

Ein Magnetventil 10 weist hier einen Druckluftanschluss 11, einen Arbeitsanschluss 12 und einen Entlüftungsanschluss 13 auf. Das Magnetventil 10 ist als 3/3-Wege-NC-Ventil ausgebildet, mit einem Anker 14 und zwei koaxial und mit Abstand zueinander angeordneten Spulen 15, 16.

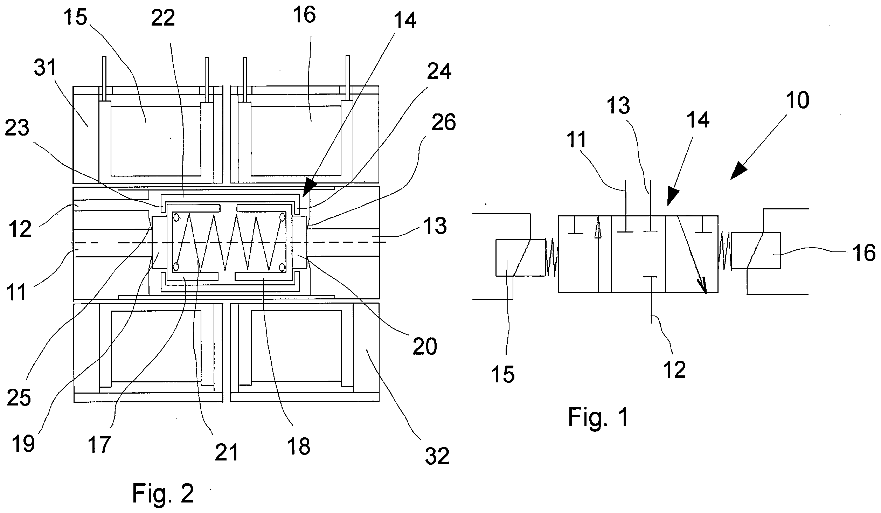

Fig. 2 zeigt die Sperr-Mittelstellung des Ankers 14. Dieser weist endseitig jeweils eine zylindrische Kappe 17, 18 mit Dichtungselement 19, 20 auf. Zwischen den Kappen 17, 18 ist eine Druckfeder 21 angeordnet, welche die Kappen 17, 18 auseinanderdrückt. Die Kraft der Druckfeder 21 ist so bemessen, dass Druckluftanschluss 11 und Entlüftungsanschluss 13 bei stromlosem Magnetventil 10 verschlossen sind.

Der Anker 14 weist eine zylindrische Röhre 22 auf, die die Kappen 17, 18 im Inneren aufnimmt und die an ihren beiden Enden mit einwärts gerichteten Rändern 23, 24 versehen ist. Der Durchmesser der Kappen 17, 18 ist so bemessen, dass die Ränder 23, 24 die Kappen 17, 18 im Inneren der Röhre 22 halten. Nur die im Wesentlichen scheibenförmigen Dichtungselemente 19, 20 treten zwischen den Rändern 23, 24 aus den Enden der Röhre 22 teilweise aus. Die Dichtungselemente 19, 20 sind einerseits fest mit Stirnseiten der Kappen 17, 18 verbunden und liegen andererseits in der Sperr-Mittelstellung an ihrem jeweiligen Sitz 25, 26 an. Diese können auch als Ventilsitze bezeichnet werden. Der Sitz 25 ist dem Druckluftanschluss 11 und der Sitz 26 ist dem Entlüftungsanschluss 13 zugeordnet.

Bei Bestromung der Spule 15 wird der Anker 14 weiter in die Spule 15 hineinbewegt, in Richtung auf den Sitz 25. Dabei federt das am Sitz 25 anliegende Dichtungselement 19 mit der Kappe 17 gegen den Druck der Feder 21 in den Anker 14 ein. Zugleich hebt das gegenüberliegende Dichtungselement 20 vom Sitz 26 ab, so dass der Entlüftungsanschluss 13 geöffnet wird. Durch Variation des Stromes in der Spule 15 kann das Öffnen des Entlüftungsanschlusses 13 moduliert bzw. getaktet werden. Bei abgehobenem Dichtungselement 20 ist der Druck am Arbeitsanschluss 12 gleich dem Druck am Entlüftungsanschluss 13.

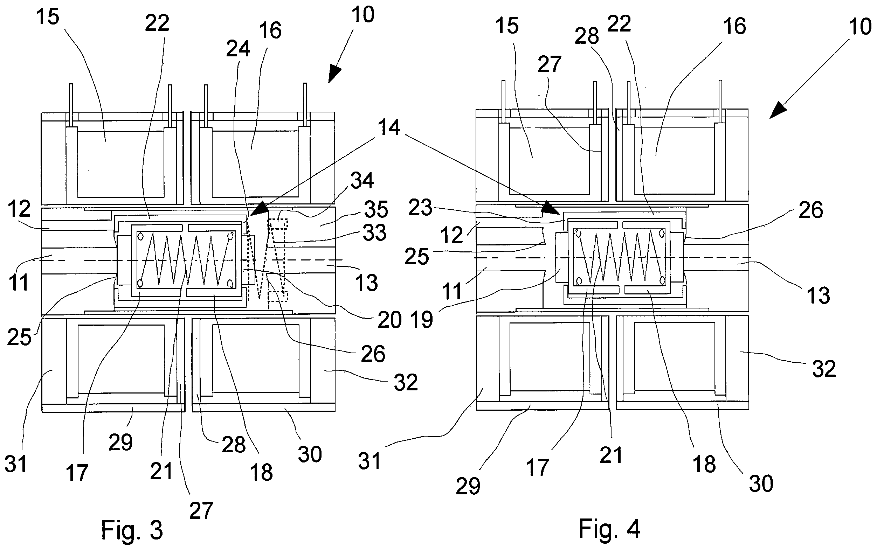

Wird die Spule 16 bestromt, bewegt sich der Anker 14 in Richtung auf den Entlüftungsanschluss 13, siehe Fig. 4. Das Dichtungselement 20 federt mit der Kappe 18 in den Anker 14 ein und liegt am Sitz 26 an, während das gegenüberliegende Dichtungselement 19 vom Sitz 25 abhebt und so den Druckluftanschluss 11 öffnet. Der Druck am Arbeitsanschluss 12 ist dann gleich dem Druck am Druckluftanschluss 11. Durch Variation des Stroms in der Spule 16 kann die Zufuhr der Druckluft über den Druckluftanschluss 11 moduliert bzw. getaktet werden.

In den Fig. 2 bis 4 verlaufen die Anschlüsse 11, 13 bzw. den Anschlüssen zugeordnete Bohrungen oder Leitungsenden zueinander entgegengesetzt und koaxial zum Anker 14. Der Arbeitsanschluss 12 bzw. dessen Bohrung ist parallel zum Druckluftanschluss 11 vorgesehen, achsparallel zum Anker 14 und noch innerhalb der Spule 15. Alternativ kann der Arbeitsanschluss 12 auch mittig zwischen den Spulen 15, 16 aus dem Magnetventil 10 herausgeführt sein.

Im stromlosen Zustand fällt der Anker 14 in die Sperr-Mittelstellung gemäß Fig. 2, nämlich durch den Druck der Feder 21. Die Kraft der Feder 21 ist so bemessen, dass sie höher ist als die zu erwartende Kraft der Druckluft am Druckluftanschluss 11.

Zwischen den Spulen 15, 16 ist ein Mitteljoch vorgesehen, welches hier geteilt ausgebildet ist, nämlich mit zwei Metallscheiben 27, 28, die zueinander einen Abstand aufweisen. Magnetische Nebenflüsse werden dadurch vermieden. Aus dem gleichen Grund besteht hier eine äußere Hülle aus zwei metallischen Rohrabschnitten 29, 30, die einen axialen Abstand zueinander aufweisen. Axial außen sind Metallscheiben 31, 32 vor den Spulen 15, 16 vorgesehen.

Eine weitere Ausführungsform der Erfindung ergibt sich nur aus Fig. 3. Gestrichelt gezeichnet sind eine Druckfeder 33 und eine Ringnut 34 in einem den Entlüftungsanschluss 13 umgebenden Kern 35. Die Druckfeder 33 sitzt zum einen in der Ringnut 34 und drückt zum anderen gegen den Rand 24 der Röhre 22. Im stromlosen Zustand des Magnetventils 10 nimmt der Anker 14 in dieser Ausführungsform durch den Druck der Feder 33 die Position gemäß Fig. 3 ein. Dabei sind der Druckluftanschluss 11 verschlossen und der Entlüftungsanschluss 13 geöffnet, ebenso der Arbeitsanschluss 12. Bei Energieausfall kann das durch das Magnetventil 10 angesteuerte Getriebebremsventil entlüftet werden.

Bei Bestromung der Ausführungsform mit Druckfeder 33 und Ringnut 34 gelangt der Anker 14 gegen den Druck der Feder 33 nach rechts, bis der Entlüftungsanschluss 13 verschlossen ist. Entsprechend genügt für diese Ausführungsform eine Bestromung der rechten Spule 16, während die linke Spule nicht bestromt werden muss. Die Mittelstellung entsprechend Fig. 2 ist einstellbar durch ausreichende Stromstärke in der Spule 16.

Die Kraft der Druckfeder 33 ist so bemessen, dass im stromlosen Zustand der Druckluftanschluss 11 durch das Dichtelement 19 verschlossen bleibt und zugleich das Dichtelement 20 vom Sitz 26 abhebt.

Das Magnetventil 10 ist vorzugsweise vorgesehen zur Belüftung und Entlüftung eines Bremszylinders für eine Getriebebremse in einem automatisierten Schaltgetriebe. Die Betätigung kann pneumatisch oder hydraulisch erfolgen, insbesondere je nach Antrieb für die Betätigung des automatisierten Schaltgetriebes.

### Bezugszeichenliste (Bestandteil der Beschreibung)

- 10: Magnetventil
- 11: Druckluftanschluss
- 12: Arbeitsanschluss
- 13: Entlüftungsanschluss
- 14: Anker
- 15: Spule
- 16: Spule
- 17: Kappe
- 18: Kappe
- 19: Dichtungselement
- 20: Dichtungselement
- 21: Druckfeder
- 22: Röhre
- 23: Rand
- 24: Rand
- 25: Sitz
- 26: Sitz
- 27: Metallscheibe
- 28: Metallscheibe
- 29: Rohrabschnitt
- 30: Rohrabschnitt
- 31: Metallscheibe
- 32: Metallscheibe
- 33: Druckfeder
- 34: Ringnut
- 35: Kern

## Patentansprüche

1. Getriebebremse für ein automatisiertes Schaltgetriebe mit einer Ventilanordnung zur Belüftung und Entlüftung eines insbesondere federbelasteten Fluidzylinders, nämlich eines Getriebebremszylinders in pneumatisch oder hydraulisch angetriebenen, automatisierten Schaltgetrieben, **gekennzeichnet durch** ein Magnetventil (10) mit mindestens drei Anschlüssen (11, 12, 13) und drei Stellungen, nämlich einem Druckluftanschluss (11), einem Arbeitsanschluss (12) und einem Entlüftungsanschluß (13), mit einer Sperr-Mittelstellung und NC-Funktion, in welcher wenigstens der Druckluftanschluss (11) gesperrt ist, wobei das Magnetventil (10) ein 3/3-Wege-Ventil ist, und wobei das Magnetventil (10) eine Federrückstellung in die Sperr-Mittelstellung oder eine Federrückstellung in eine Endstellung, insbesondere in eine Sperr-Endstellung mit einem offenen Entlüftungsanschluss (13), aufweist.

2. Getriebebremse nach Anspruch 1 **dadurch gekennzeichnet, dass** das Magnetventil (10) einen Anker (14) und zwei Spulen (15, 16) aufweist, wobei die Spulen (15, 16) axial zueinander versetzt angeordnet sind und der Anker (14) in Sperr-Mittelstellung in beide Spulen (15, 16) teilweise eintaucht.

3. Getriebebremse nach Anspruch 1 oder 2, **dadurch gekennzeichnet, dass** der Anker (14) an seinen beiden Enden insbesondere federbelastete Dichtelemente (19, 20) aufweist, welche in Sperr-Mittelstellung Anschlüsse (11, 13) des Magnetventils (10) abdichten.

4. Getriebebremse nach Anspruch 3, **dadurch gekennzeichnet, dass** die Dichtungselemente (19, 20) und die Anschlüsse (11, 13) koaxial ausgerichtet sind.

5. Getriebebremse nach Anspruch 3 oder 4, **dadurch gekennzeichnet, dass** die Dichtelemente (19, 20) aus den Enden des Ankers (14) herausragen.

6. Getriebebremse
nach Anspruch 3 oder einem der weiteren Ansprüche, **dadurch gekennzeichnet, dass** die Dichtelemente (19, 20) - bei Bewegung des Ankers (14) - gegen den Druck einer im Anker liegenden Feder (21) in die Enden des Ankers (14) eindrückbar sind.

7. Getriebebremse nach Anspruch 3 oder einem der weiteren Ansprüche, **dadurch gekennzeichnet, dass** bei Bewegung des Ankers (14) in eine der Spulen (15, 16) eines der Dichtelemente (19, 20) an seinem Anschluss bzw. einem zugehörigen Sitz anliegt und zugleich in den Anker (14) eintaucht, während das andere Dichtelement von seinem Anschluss bzw. einem zugehörigen Sitz abhebt und diesen Anschluss freigibt.

8. Getriebebremse nach Anspruch 3 oder einem der weiteren Ansprüche, **dadurch gekennzeichnet, dass** der Anker (14) eine Röhre (22) mit endseitigen Öffnungen aufweist, dass in der Röhre zwei Kappen (17, 18) auf einer gemeinsamen Druckfeder (21) stecken und von dieser in axialer Richtung auseinandergedrückt werden, und dass die Kappen (17, 18) endseitig mit den Dichtelementen (19, 20) versehen sind.

9. Getriebebremse nach Anspruch 8, **dadurch gekennzeichnet, dass** die Dichtelemente (19, 20) einen geringeren Durchmesser aufweisen als die Kappen (17, 18), und dass vorzugsweise die Röhre (22) endseitig jeweils einwärts gerichtete Ränder (23, 24) aufweist, zum Abstützen von Kappenrändern an Stirnseiten der Kappen (17, 18).

10. Getriebebremse nach Anspruch 1 oder einem der weiteren Ansprüche, **dadurch gekennzeichnet, dass** außenseitige oder nach außen führende Anschlüsse (11, 13) am Magnetventil (10) zum Belüften und Entlüften koaxial zum Anker (14) ausgerichtet sind.

11. Getriebebremse nach Anspruch 10, **dadurch gekennzeichnet, dass** mindestens ein Arbeitsanschluss (12) am Magnetventil (10) achsparallel zum Anker (14) ausgerichtet ist.

12. Getriebebremse nach Anspruch 1 oder einem der weiteren Ansprüche, **dadurch gekennzeichnet, dass** das Magnetventil eine Federrückstellung in eine Stellung aufweist, in der entweder nur ein Pfad zwischen einem Anschluss für ein unter Druck stehendes Fluid und einem Arbeitsanschluss versperrt ist, oder in der außerdem ein Pfad zwischen Arbeitsanschluss und einem Entlüftungsanschluss versperrt ist.

## Claims

1. Gear brake for an automated change-speed gearbox having a valve arrangement for inputting and outputting air to/from a fluid cylinder which is, in particular, spring-loaded, namely a gear brake cylinder in pneumatically or hydraulically driven, automated change-speed gearboxes, **characterized by** a solenoid valve (10) having at least three connectors (11, 12, 13) and three positions, namely a compressed air connector (11), a working connector (12) and an air-outputting connector (13), with a blocking centre position and NC function, in which at least the compressed air connector (11) is blocked, the solenoid valve (10) being a 3/3-way valve, and the solenoid valve (10) having a spring resetting means into the blocking centre position or a spring resetting means into an end position, in particular into a blocking end position with an open air-outputting connector (13).

2. Gear brake according to Claim 1, **characterized in that** the solenoid valve (10) has an armature (14) and two coils (15, 16), the coils (15, 16) being arranged offset axially with respect to one another, and the armature (14) dipping partially into the two coils (15, 16) in the blocking centre position.

3. Gear brake according to Claim 1 or 2, **characterized in that**, at its two ends, the armature (14) has, in particular, spring-loaded sealing elements (19, 20) which seal connectors (11, 13) of the solenoid valve (10) in the blocking centre position.

4. Gear brake according to Claim 3, **characterized in that** the seal elements (19, 20) and the connectors (11, 13) are oriented coaxially.

5. Gear brake according to Claim 3 or 4, **characterized in that** the sealing elements (19, 20) protrude out of the ends of the armature (14).

6. Gear brake according to Claim 3 or one of the further claims, **characterized in that**, in the case of a movement of the armature (14), the sealing elements (19, 20) can be pressed into the ends of the armature (14) counter to the pressure of a spring (21) which lies in the armature.

7. Gear brake according to Claim 3 or one of the further claims, **characterized in that**, in the case of a movement of the armature (14) into one of the coils (15, 16), one of the sealing elements (19, 20) bears against its connector or an associated seat and at the same time dips into the armature (14), while the other sealing element lifts up from its connector or an associated seat and opens the said connector.

8. Gear brake according to Claim 3 or one of the further claims, **characterized in that** the armature (14) has a tube (22) with end-side openings, **in that** two caps (17, 18) are plugged on a common compression spring (21) in the tube and are pressed apart from one another in the axial direction by the said compression spring (21), and **in that** the caps (17, 18) are provided on the end side with the sealing elements (19, 20).

9. Gear brake according to Claim 8, **characterized in that** the sealing elements (19, 20) have a smaller diameter than the caps (17, 18), and **in that**, on the end side, the tube (22) preferably in each case has inwardly directed edges (23, 24), for supporting cap edges on end sides of the caps (17, 18).

10. Gear brake according to Claim 1 or one of the further claims, **characterized in that** outer-side or outwardly leading connectors (11, 13) on the solenoid valve (10) for inputting and outputting air are oriented coaxially with respect to the armature (14).

11. Gear brake according to Claim 10, **characterized in that** at least one working connector (12) on the solenoid valve (10) is oriented in an axially parallel manner with respect to the armature (14).

12. Gear brake according to Claim 1 or one of the further claims, **characterized in that** the solenoid valve has a spring resetting means into a position, in which either only a path between a connector for a pressurized fluid and a working connector is blocked, or in which, moreover, a path between the working connector and an air-outputting connector is blocked.

## Revendications

1. Frein de transmission pour boîte de vitesse automatique, présentant un ensemble de ventilateur qui ventile et évente un cylindre hydraulique en particulier sollicité élastiquement, à savoir un cylindre de frein de transmission de boîtes de vitesse automatique à entraînement pneumatique ou hydraulique, **caractérisé par**
une soupape magnétique (10) qui présente au moins trois raccordements (11, 12, 13) et trois positions, à savoir un raccordement (11) à l'air comprimé, un raccordement de travail (12) et un raccordement d'évent (13), avec une position centrale de blocage et une fonction NC dans laquelle au moins le raccordement (11) à l'air comprimé est bloqué, la soupape magnétique (10) étant une soupape à 3/3 voies, la soupape magnétique (10) présentant un renvoi élastique dans la position centrale de blocage ou un renvoi élastique dans une position d'extrémité et en particulier dans une position d'extrémité de blocage dans laquelle le raccordement d'évent (13) est ouvert.

2. Frein de transmission selon la revendication 1, **caractérisé en ce que** la soupape magnétique (10) présente un induit (14) et deux bobines (15, 16), les bobines (15, 16) étant décalées axialement l'une par rapport à l'autre et l'induit (14) pénétrant en partie dans les deux bobines (15, 16) dans la position centrale de blocage.

3. Frein de transmission selon les revendications 1 ou 2, **caractérisé en ce que** l'induit (14) présente à ses deux extrémités des éléments d'étanchéité (19, 20) en particulier sollicités élastiquement, qui assurent l'étanchéité des bornes de raccordement (11, 13) de la soupape magnétique (10) dans la position centrale de blocage.

4. Frein de transmission selon la revendication 3, **caractérisé en ce que** les éléments d'étanchéité (19, 20) et les raccordements (11, 13) sont alignés coaxialement.

5. Frein de transmission selon les revendications 3 ou 4, **caractérisé en ce que** les éléments d'étanchéité (19, 20) débordent hors des extrémités de l'induit (14) .

6. Frein de transmission selon la revendication 3 ou l'une des autres revendications, **caractérisé en ce que** les éléments d'étanchéité (19, 20) peuvent être repoussés dans les extrémités de l'induit (14) en opposition à la poussée d'un ressort (21) disposé dans l'induit lorsque l'induit (14) est déplacé.

7. Frein de transmission selon la revendication 3 ou l'une des autres revendications, **caractérisé en ce que** lorsque l'induit (14) est déplacé dans une des bobines (15, 16), l'un des éléments d'étanchéité (19, 20) vient se placer contre son raccordement ou un siège qui lui est associé et s'enfonce en même temps dans l'induit (14) tandis que l'autre élément d'étanchéité se relève de son raccordement ou d'un siège qui y est associé et libère ce raccordement.

8. Frein de transmission selon la revendication 3 ou l'une des autres revendications, **caractérisé en ce que** l'induit (14) présente un tube (22) doté d'ouvertures à ses extrémités, **en ce que** deux bonnets (17, 18) se placent sur un ressort de poussée (21) commun dans le tube et sont écartés de ce ressort de poussée dans la direction axiale, et **en ce que** les bonnets (17, 18) sont dotés des éléments d'étanchéité (19, 20) à leur extrémité.

9. Frein de transmission selon la revendication 8, **caractérisé en ce que** les éléments d'étanchéité (19, 20) ont un diamètre plus petit que les bonnets (17, 18) et **en ce que** de préférence, le tube (22) présente à chacune de ses extrémités des bords (23, 24) orientés vers l'intérieur qui soutiennent les bords des côtés frontaux des bonnets (17, 18).

10. Frein de transmission selon la revendication 1 ou l'une des autres revendications, **caractérisé en ce que** des raccords extérieurs (11, 13) et conduisant vers l'extérieur sont disposés sur la soupape magnétique (10), coaxialement à l'induit (14), pour la ventilation et l'évacuation de l'air.

11. Frein de transmission selon la revendication 10, **caractérisé en ce qu'**au moins un raccordement de travail (12) prévu sur la soupape magnétique (10) est aligné parallèlement à l'axe de l'induit (14).

12. Frein de transmission selon la revendication 1 ou l'une des autres revendications, **caractérisé en ce que** la soupape magnétique présente un rappel élastique en une position dans laquelle seul un parcours entre un raccord pour fluide sous pression et un raccord de travail est bloqué ou dans lequel un parcours entre le raccord de travail et un raccord d'évent est en outre bloqué.
